# EUROPEAN PATENT APPLICATION

(11) **EP 2 566 129 A1**
(43) Date of publication of application: **06.03.2013**
(21) Application number: 11786131.0
(22) Date of filing: 03.06.2011
(51) Int. Cl.: H04L 29/06

(54) **METHOD, APPARATUS AND SYSTEM FOR ACQUIRING MEDIA ACCESS CONTROL ADDRESS**

(30) Priority: 21.12.2010 CN 201010603483
(71) Applicant: Huawei Technologies Co., Ltd., Shenzhen, Guangdong 518129 (CN)
(72) Inventor: ZHU, Guojun, Guangdong 518129 (CN)
(74) Representative: Kreuz, Georg Maria
(86) International application number: PCT/CN2011/075331
(87) International publication number: WO 2011/147359

(57) **Abstract**

The present invention discloses a method for acquiring a media access control address, and the method includes: receiving a first address resolution protocol ARP broadcast packet sent by a first terminal; acquiring an address of an ARP server, modifying a destination address of the first ARP broadcast packet to make it be the address of the ARP server, and sending the modified first ARP broadcast packet to the ARP server, so that the ARP server acquires a MAC address of the second terminal according to the modified packet, and sends an ARP reply packet to the first terminal, where the ARP reply packet includes the MAC address of the second terminal. In embodiments of the present invention, the address of the ARP server is acquired, and the destination address of the first ARP broadcast packet is modified to make it be the address of the ARP server; the ARP broadcast packet becomes a unicast packet sent to only the ARP server, network bandwidth occupied by ARP broadcast is reduced; because the modified ARP broadcast packet is sent to only the ARP server, and cannot be received by other receiving ends, occupancy of CPU resources of other receiving ends in the network is prevented, and a resource utilization rate of the system and a communication efficiency of each terminal are improved.

## Description

This application claims priority to Chinese Patent Application No. 201010603483.6, filed with the Chinese Patent Office on December 21, 2010 and entitled "METHOD, APPARATUS AND SYSTEM FOR ACQUIRING MEDIA ACCESS CONTROL ADDRESS", which is incorporated herein by reference in its entirety.

### FIELD OF THE INVENTION

The present invention relates to the field of communications technologies, and in particular, to a method, an apparatus and a system for acquiring a media access control address.

### BACKGROUND OF THE INVENTION

It is regulated in an Ethernet protocol that, if a host needs to perform direct communication with another host in the same local area network, a MAC (Medium/Media Access Control, medium/media access control) address of a target host must be learned, while in a TCP/IP protocol (Transmission Control Protocol/Internet Protocol, transmission control protocol/Internet protocol), a network layer and a transmission layer only concern an IP address of the target host. As a result, when an IP protocol is used in the Ethernet, data provided by an upper-layer IP protocol connected to an Ethernet protocol of a data link layer only includes an IP address of a destination host. Therefore, a method is needed to acquire a MAC address of the destination host according to the IP address of the destination host.

In the prior art, a host that initiates communication seeks the destination host by sending an ARP (Address Resolution Protocol, address resolution protocol) broadcast, and acquires the MAC address of the destination host, and then adds the MAC address in a frame packet as a destination address of the communication. For example, a host A whose IP address is 192.168.1.5, sends data to a host B whose IP address is 192.168.1.1. When sending the data, the host A checks whether a target IP address exists in its own ARP cache table. If yes, a target MAC address is learned, and the target MAC address may be directly written into a frame to be sent; and if the target IP address is not found in the ARP cache table, the host A sends a broadcast in a network, an host A MAC address is "a MAC address of the host A", which indicates sending a query to all hosts in the same network segment: "I am 192.168.1.5, my hardware address is "a MAC address of the host A", and what is the MAC address whose IP address is 192.168.1.1, please?" Other hosts in the network do not reply to the ARP query. Only when receiving the frame, the host B replies to the host A: "the MAC address of 192.168.1.1 is 00-aa-00-62-c6-09." In this way, the host A learns the MAC address of the host B, and the host A may send information to the host B. At the same time, the host A and host B update their own ARP cache tables. Because the host A tells the host B its own IP and MAC address together during the query, when the host A re-sends the information to the host B or the host B sends information to the host A next time, the host A or host B may directly perform seeking in the respective ARP cache table.

During the process of implementing the present invention, the inventor finds that the prior art has the following problems:
By using the ARP, a MAC address corresponding to a certain IP address by broadcasting is acquired. However, because of the adopted broadcast mechanism thereof, when the number of hosts in a second-layer network is large, and when the communication between the hosts is frequent, a large number of ARP broadcast packets emerge in the network. The network bandwidth is severely occupied. Besides, when the MAC address is acquired by using the method, all the hosts need to receive and process the ARP packet, but in reality, only one host needs to reply, and CPU resources of other hosts are consumed. Actual measurement data indicates that, when the number of the ARP packet in the network reaches 1000 per second, a CPU occupancy rate of the host is 30%, thereby causing serious waste of a communication system resource, and affecting the performing of normal communication.

### SUMMARY OF THE INVENTION

In order to reduce occupation of network bandwidth caused by a broadcast packet, an embodiment of the present invention provides a method for acquiring a media access control address, including:
receiving a first address resolution protocol ARP broadcast packet sent by a first terminal, where the first ARP broadcast packet is used to request acquiring a media access control MAC address of a second terminal;
acquiring an address of an ARP server, and modifying a destination address of the first ARP broadcast packet to make it be the address of the ARP server; and
sending the modified first ARP broadcast packet to the ARP server, so that the ARP server acquires the MAC address of the second terminal according to the modified first ARP broadcast packet, and sends an ARP reply packet to the first terminal, where the ARP reply packet
   includes the MAC address of the second terminal.

An embodiment of the present invention further provides a proxy module, including:
an ARP broadcast packet receiving module, configured to receive a first address resolution protocol ARP broadcast packet sent by a first terminal, where the first ARP broadcast packet is used to request acquiring a media access control MAC address of a second terminal;
a destination address modification module, configured to acquire an address of an ARP server, and modify a destination address of the first ARP broadcast packet to make it be the address of the ARP server; and
a modified packet sending module, configured to send the modified first ARP broadcast packet to the ARP server, so that the ARP server acquires the MAC address of the second terminal according to the modified first ARP broadcast packet, and sends an ARP reply packet to the first terminal, where the ARP reply packet includes the MAC address of the second terminal.

An embodiment of the present invention further provides a server, including:
an IP address acquiring module of a second terminal, configured to acquire an IP address of a second terminal in a modified first ARP broadcast packet; and
a MAC address acquiring module of the second terminal, configured to inquire correspondence between the IP address of the terminal and a MAC address of the terminal, and acquire the MAC address corresponding to the IP address of the second terminal.

An embodiment of the present invention further provides a system for acquiring a media access control address, where the system includes a proxy module and an ARP server, where:
the proxy module is configured to receive a first address resolution protocol ARP broadcast packet sent by a first terminal, where the first ARP broadcast packet is used to request acquiring a media access control MAC address of a second terminal; acquire an address of an ARP server, modify a destination address of the first ARP broadcast packet to make it be the address of the ARP server; and send the modified first ARP broadcast packet to the ARP server; and
the ARP server is configured to receive the modified first ARP broadcast packet sent by the proxy module; acquire the MAC address of the second terminal according to the modified first ARP broadcast packet, and send an ARP reply packet to the first terminal, where the ARP reply packet includes the MAC address of the second terminal.

In the embodiment of the present invention, the address of the ARP server is acquired, and the destination address of the first ARP broadcast packet is modified to make it be the address of the ARP server; the ARP broadcast packet becomes a unicast packet sent to only the ARP server, the network bandwidth occupied by the ARP broadcast is reduced. Besides, because the modified ARP broadcast packet is sent to only the ARP server and the ARP reply packet including the MAC address of the second terminal is sent by the ARP server, and other receiving ends in the network can not receive the modified ARP broadcast packet, occupancy of CPU resources of other receiving ends in the network is prevented, and a resource utilization rate of the system and a communication efficiency of each terminal are improved.

### BRIEF DESCRIPTION OF THE DRAWINGS

FIG. 1 is a flow chart of a method for acquiring a MAC address according to Embodiment 1 of the present invention;
FIG. 2 is an information interaction diagram of a method for acquiring a MAC address according to Embodiment 2 of the present invention;
FIG. 3 is a schematic structural diagram of a network according to Embodiment 2 of the present invention;
FIG. 4 is an information interaction diagram of a method for acquiring a MAC address according to Embodiment 3 of the present invention;
FIG. 5 is an information interaction diagram of updating ARP server address information in a method for acquiring a MAC address according to Embodiment 3 of the present invention;
FIG. 6 is an information interaction diagram of S409 to S410 in a method for acquiring a MAC address according to Embodiment 4 of the present invention;
FIG. 7A and FIG. 7B is an information interaction diagram of a method for acquiring a MAC address according to Embodiment 5 of the present invention;
FIG. 8A and FIG. 8B is an information interaction diagram of a method for acquiring a MAC address according to Embodiment 6 of the present invention;
FIG. 9 is a schematic structural diagram of a proxy module according to Embodiment 7 of the present invention;
FIG. 10 is a schematic structural diagram of another proxy module according to Embodiment 8 of the present invention;
FIG. 11 is a schematic structural diagram of an ARP server according to Embodiment 9 of the present invention;
FIG. 12 is a schematic structural diagram of another ARP server according to Embodiment 10 of the present invention; and
FIG. 13 is a schematic structural diagram of a system for acquiring a media access control address according to Embodiment 11 of the present invention.

### DETAILED DESCRIPTION OF THE EMBODIMENTS

To make the objectives, technical solutions, and advantages of the present invention more comprehensible, the following describes the embodiments of the present invention in further detail with reference to the accompanying drawings.

### Embodiment 1

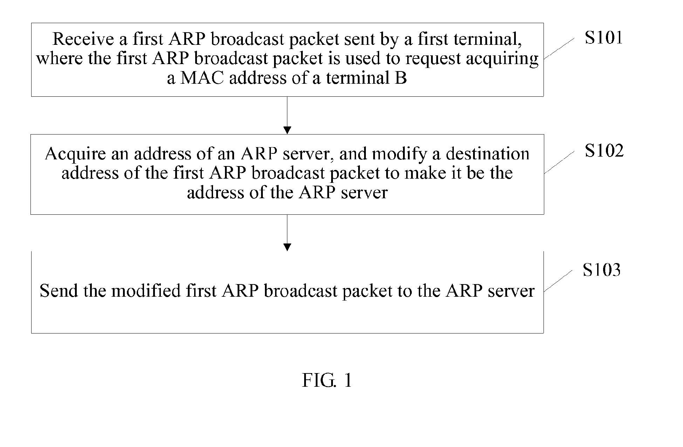

As shown in FIG. 1, an embodiment of the present invention provides a method for acquiring a MAC address, and the method includes the following steps:
S101: Receive a first ARP broadcast packet sent by a first terminal, where the first ARP broadcast packet is used to request acquiring a MAC address of a second terminal.
S102: Acquire an address of an ARP server, and modify a destination address of the first ARP broadcast packet to make it be the address of the ARP server.
S103: Send the modified first ARP broadcast packet to the ARP server, so that the ARP server acquires the MAC address of the second terminal according to the modified first ARP broadcast packet, and sends an ARP reply packet to the first terminal, where the ARP reply packet includes the MAC address of the second terminal.

It should be noted that, in Embodiment 1 of the present invention, a subject of executing steps S101 to S103 may be an apparatus for acquiring the MAC address. The apparatus may be a single physical device, and may be located in software for terminal communication, or located in a virtual switch in a server, or located in a switch. Its position should be between a host network interface and a device of a second-layer network access layer. Before the ARP broadcast packet of the host is forwarded to the overall second-layer network,

In the embodiment of the present invention, the address of the ARP server is acquired, and the destination address of the first ARP broadcast packet is modified to make it be the address of the ARP server; the ARP broadcast packet becomes a unicast packet sent to only the ARP server, the network bandwidth occupied by the ARP broadcast is reduced. Besides, because the modified ARP broadcast packet is sent to only the ARP server and the ARP reply packet including the MAC address of the second terminal is sent by the ARP server, and other receiving ends in the network can not receive the modified ARP broadcast packet, occupancy of CPU resources of other receiving ends in the network is prevented, and a resource utilization rate of the system and a communication efficiency of each terminal are improved.

### Embodiment 2

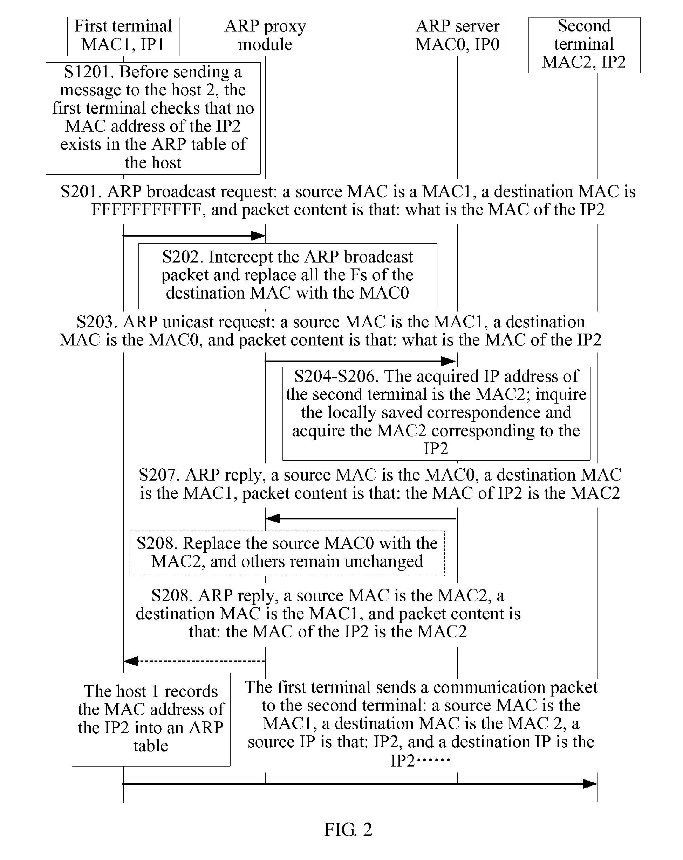

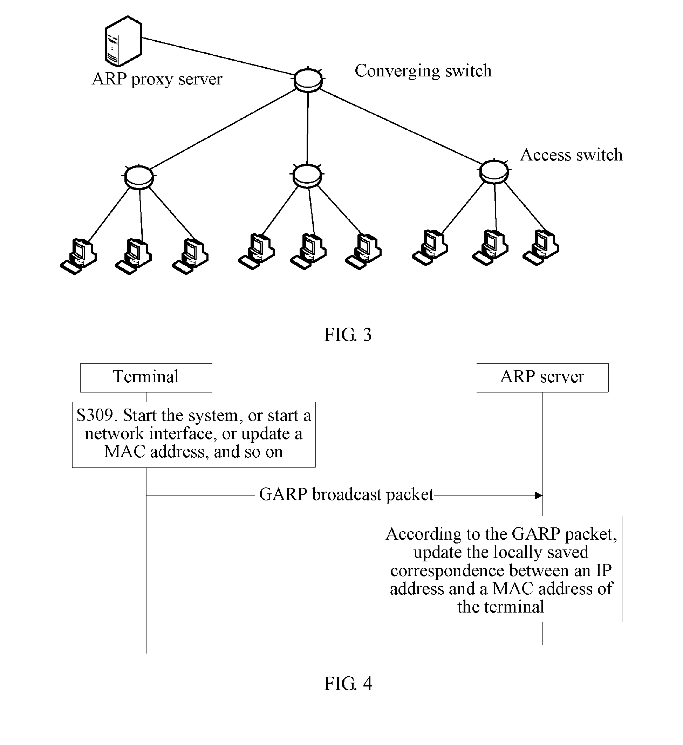

As shown in FIG. 2, an embodiment of the present invention provides a method for acquiring a MAC address, a subject of executing each step in the method of this embodiment may be a device or a software module, its position is between a terminal network interface and a device of a second-layer network access layer of a network structural diagram shown in FIG. 3, and before an ARP broadcast packet of the host is forwarded to the overall second-layer network. This embodiment selects an ARP proxy module as an example, and the method includes the following steps:
S201: The ARP proxy module receives a first ARP broadcast packet sent by a first terminal, where the first ARP broadcast packet is used to request acquiring a MAC address of a second terminal.
   The first ARP broadcast packet is a standard ARP broadcast packet. The packet includes a MAC address and an IP address of a packet sending end, an IP address of a packet receiving end, and a broadcast MAC address whose destination address is "FF.FF.FF.FF.FF.FF", which indicates sending queries to all hosts in the same network segment, and all the hosts in the same network segment receive the broadcast.
   For example, before sending a message to the second terminal, the first terminal checks that no MAC address corresponding to the IP address of the second terminal exists in the ARP table of the first terminal, an ARP broadcast request is sent: a source MAC: a MAC1; a destination MAC: FFFFFFFFFFF; and packet content is that: "what is the MAC of IP2?" VM is used to indicate each terminal with a communication demand; the first terminal whose IP address is IP1 has learned an IP address of the second terminal, the first terminal needs to communicate with the second terminal, the first terminal does not have ARP information of the second terminal locally; and the first terminal initiates an ARP broadcast request.
S202: The ARP proxy module acquires a locally saved address of an ARP server, and modifies a destination address of the first ARP broadcast packet to make it be an address of the ARP server.
   Because the ARP proxy module is located between each terminal network interface and the device of the second-layer network access layer, the ARP proxy module may intercept information sent by each terminal to devices in the second-layer network.
   Optionally, the locally saved address information of the ARP server may be the IP address of the ARP server, or may be directly the MAC address of the ARP server, or an IP and a MAC address of the APR proxy server; if there is only the IP address of the ARP server, the ARP proxy module needs to initiate a standard ARP request process, and acquire the MAC address of the ARP server.
   Specifically, when the locally saved address of the APR server is the MAC address of the ARP server, the destination MAC address of the first ARP broadcast packet is modified to make it be the MAC address of the ARP server.
   When the locally saved address of the APR server is the IP address of the ARP server, a second ARP broadcast packet corresponding to the MAC address of the ARP server acquired according to the IP address of the ARP server is sent, and the destination MAC address of the first ARP broadcast packet is modified to make it be the acquired MAC address of the ARP server.
   For example, when the ARP proxy module intercepts the ARP broadcast packet sent by the first terminal in S201, all the Fs of the destination MAC are replaced with a MAC0. That is, when the ARP proxy module intercepts the ARP broadcast packet sent by the first terminal in S201, first check whether there already exists the MAC address of the ARP server locally, namely a MAC0; if there already exists the MAC0, the destination address in the packet is replaced with the MAC0, if no MAC information exists, but only IP information, the ARP request process is initiated first, the MAC address of the ARP server is acquired, and the foregoing replacement operation is then performed. After the replacement is completed, the packet whose destination MAC is modified is sent to the network. If no MAC address of the ARP server is acquired, the broadcast packet may be discarded or directly sent out.
S203: The ARP proxy module sends the modified first ARP broadcast packet to the ARP server according to the address of the ARP server.
   Specifically, the broadcast packet whose destination MAC address is modified becomes a unicast packet that is sent to only the ARP server, the source MAC of the ARP unicast request is the MAC1, the destination MAC is the MAC0, and the packet content is that: "what is the MAC of IP2?"
S204: After receiving the modified first ARP broadcast packet, the ARP server acquires the IP address of the second terminal in the modified first ARP broadcast packet.
S205: The ARP server acquires the locally saved correspondence between the IP address of the terminal and the MAC address of the terminal.
S206: According to the IP address of the second terminal, the ARP server inquires the correspondence between the IP address of the terminal and the MAC address of the terminal, and acquires the MAC address corresponding to the IP address of the second terminal.
   Specifically, after receiving an ARP request packet whose destination MAC address is the MAC address of the ARP server, the ARP server resolves the content of the packet, acquires the IP address of the second terminal, and inquires the MAC address corresponding to the IP2 through the locally saved correspondence between the IP address of the terminal and the MAC address of the terminal. If the record is found, the MAC address in the correspondence is used as the MAC address ofIP2.
S207: The ARP server sends an ARP reply packet to the first terminal, where the ARP reply packet includes the MAC address of the second terminal.
   Specifically, the ARP server sends an ARP reply message (ARP reply) to the first terminal. The source MAC address of the ARP Replay packet is the MAC address MAC0 of the ARP server, and the destination MAC address is the MAC1 of the first terminal. In the packet, the sent MAC Address is the MAC2 of the second terminal, and the sent IP Address is IP2 of the second terminal; and in the packet, the destination MAC Address is the MAC1 of the first terminal, and the destination IP Address is the IP1 of the first terminal. The packet content is that: the MAC of the IP2 is the MAC2.
S208: Acquire the ARP reply packet, replace a source MAC address in the ARP reply packet with the MAC address of the second terminal, and replace a source IP address in the ARP reply packet with the IP address of the second terminal.

By executing the foregoing steps, the first terminal may perform communication with the second terminal, send a communication packet to the second terminal: the source MAC of the packet is the MAC address of the first terminal, namely the MAC1; and the destination MAC address is the MAC address of the second terminal, namely the MAC2.

It should be noted that, in Embodiment 2 of the present invention, a subject of executing each step may be an apparatus for acquiring the MAC address. The apparatus may be a single physical device, and may be located in software for terminal communication, or located in a virtual switch in a server, or located in a switch. Its position should be between the terminal network interface and the device of the second-layer network access layer, so that before the ARP broadcast packet sent by the terminal is forwarded by a switching device to the overall second-layer network, the ARP broadcast packet is intercepted.

In the embodiment of the present invention, the address of the ARP server is acquired, and the destination address of the first ARP broadcast packet is modified to make it be the address of the ARP server; the ARP broadcast packet becomes a unicast packet sent to only the ARP server, the network bandwidth occupied by the ARP broadcast is reduced. Besides, because the modified ARP broadcast packet is sent to only the ARP server and the ARP reply packet including the MAC address of the second terminal is sent by the ARP server, and other receiving ends in the network can not receive the modified ARP broadcast packet, occupancy of CPU resources of other receiving ends in the network is prevented, and a resource utilization rate of the system and a communication efficiency of each terminal are improved.

### Embodiment 3

An embodiment of the present invention provides a method for acquiring a MAC address, including step S301 to S310, where step S301 to S308 are the same as step S201 to S208 in Embodiment 2 of the present invention, which are not repeated again herein. For specific steps and figures, refer to Embodiment 2. As shown in FIG. 4, the difference between this embodiment and Embodiment 2 is that this embodiment further includes S309 to S310:
S309: The ARP server receives a GARP broadcast packet sent by a terminal;
   Specifically, the terminal sends the GARP broadcast packet when the terminal is started, or a network interface of the terminal is started, or the terminal changes the MAC address.
   The format of the GARP broadcast packet is a standard GARP broadcast packet.
S310: The ARP server acquires an IP address of the terminal in the GARP broadcast packet, determines whether a MAC address corresponding to the IP address exists in the locally saved correspondence between the IP address and the MAC address of the terminal. If the MAC address does not exist in the correspondence, the ARP server stores the correspondence between the IP address and the MAC address in the GARP packet in the locally saved correspondence between the IP address and the MAC address of the terminal; and if the MAC address exists in the correspondence, the ARP server determines whether the MAC address corresponding the IP address is consistent with the the MAC address in the GARP broadcast packet, if yes, no processing is performed; and if not, the MAC address in the GAPR broadcast packet is replaced with an original MAC address.

The locally saved correspondence between the IP address and the MAC address of the terminal may be as shown in Table 1:

**Table 1**

| Sequence No. | IP address | MAC address |
|---|---|---|
| 1 | xxxxxxxx | xxxxxxxx |
| 2 | 10.85.132.31 | 00:0f e2:2f:e4:6c |
| ... | ... | ... |

Preferably, an aging timer may be further set for the received MAC address and the received IP address of each terminal, where the aging timer is configured to record the effectiveness of the stored MAC address and the stored IP address of the terminal. When no MAC address corresponding to the IP address of the terminal in the GARP broadcast packet received by the ARP server exists in the locally saved correspondence between the IP address and the saved MAC address of the terminal, the address relation in the GARP is stored, and at the same time, the aging timer is started; and when the MAC address corresponding to the IP address exists, whether the MAC address corresponding to the IP address is consistent with the MAC address in the GAPR broadcast packet is determined. If yes, the aging timer is updated, namely the current address of the terminal is consider to be effective; and if not, the original MAC address is replaced with the MAC address in the GAPR broadcast packet, and at the same time, the aging timer is updated.

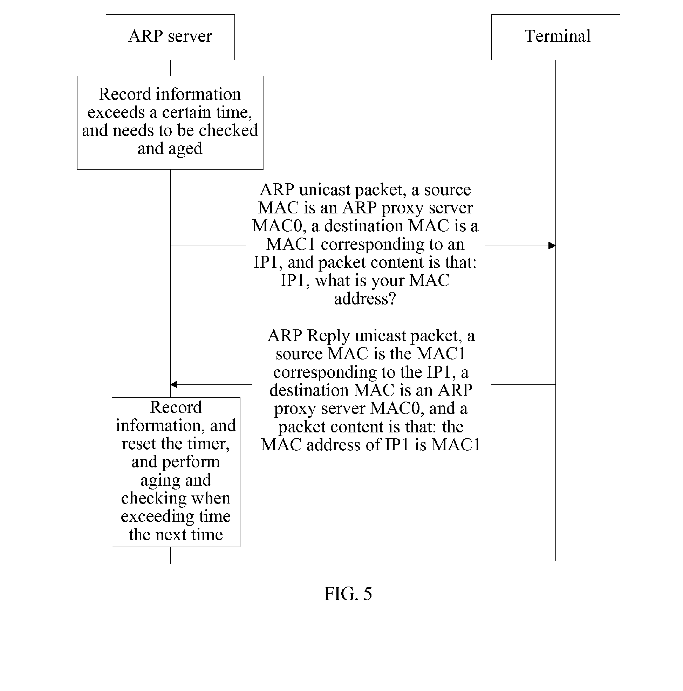

Furthermore, preferably, in order to maintain the accuracy of the information collected by the ARP server, the ARP server may send confirmation information to data in a record table at a fixed time in the form of unicast. For example, as shown in FIG. 5, when the address information recorded on the ARP server, namely the correspondence between the MAC address and the IP address, exceeds certain time, and needs to be checked and aged, the ARP server sends the confirmation information to the terminal in the form of an ARP unicast packet, such as a source MAC: an ARP server MAC0; a destination MAC: a MAC1 corresponding to an IP1; and packet content is that: "IP1, what is your MAC address?" The terminal sends an ARP Reply unicast packet corresponding to the ARP packet, such as, the ARP Reply unicast packet is that: the source MAC is the MAC1 corresponding to the IP1; the destination MAC is the MAC0; and the packet content is that: "the MAC address of the IP1 is the MAC1. "The ARP server receives and records the ARP Reply unicast packet, and re-performs aging and checking on the information when exceeding time the next time.

It should be noted that, the ARP server related to this embodiment is located in a network, and may detect a broadcast message initiated by other terminals. A second-layer broadcast or unicast message sent by the ARP server may also be received by a corresponding host, which may be a server, a network device, or an entity that can receive Ethernet packet information in the network. When each terminal is initially started, a network interface card is started to be used or the MAC address is changed, each terminal in the second-layer Ethernet sends a GARP (Gratuitous ARP, gratuitous ARP) to the network in the form of broadcast, which is used to notify the network device of updating information of a forwarding table, and at the same time, it is convenient for other devices to refresh a local ARP record table.

In the embodiment of the present invention, the address of the ARP server is acquired, and the destination address of the first ARP broadcast packet is modified to make it be the address of the ARP server; the ARP broadcast packet becomes a unicast packet sent to only the ARP server, the network bandwidth occupied by the ARP broadcast is reduced. Besides, because the modified ARP broadcast packet is sent to only the ARP server and the ARP reply packet including the MAC address of the second terminal is sent by the ARP server, and other receiving ends in the network can not receive the modified ARP broadcast packet, occupancy of CPU resources of other receiving ends in the network is prevented, and a resource utilization rate of the system and a communication efficiency of each terminal are improved. Besides, in this embodiment, the ARP server actively acquires the correspondence between the IP address and the MAC address of each terminal, and updates the locally stored correspondence according to the GARP packet sent by the terminal, thereby effectively assuring the reliability of the locally stored address information.

### Embodiment 4

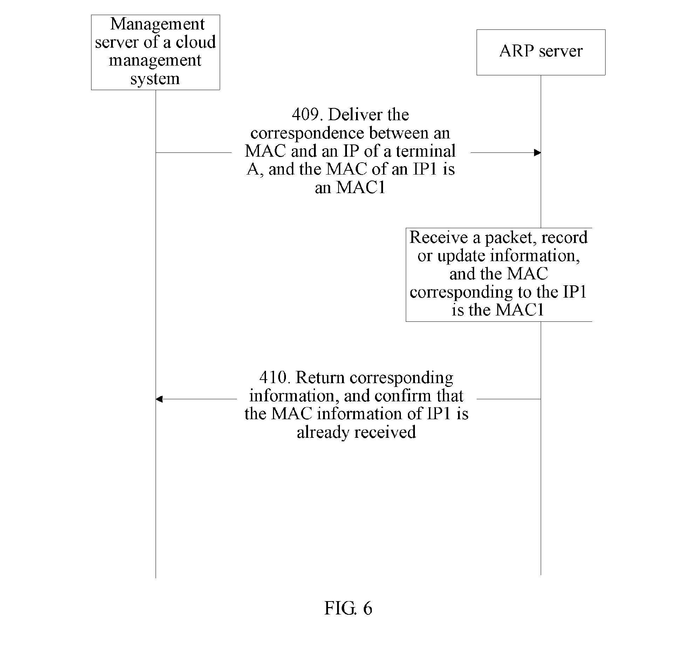

An embodiment of the present invention further provides a method for acquiring a MAC address. The method in this embodiment is mainly applied in a network of a cloud computing virtualized data center, and the method relates to a management server, where the management server is configured to create and manage each terminal of a cloud management system, for example, a virtual machine, allocate an IP and a MAC for each terminal, and set correspondence between the MAC and the IP to the ARP server. The ARP server related in this embodiment is located in a network, and may perform communication with the management server. The method includes steps S401 to S410, where steps S401 to S408 are the same as steps S201 to S208 in Embodiment 2 of the present invention, which are not repeated again herein. For specific steps and figures, refer to Embodiment 2. As shown in FIG. 6, the difference between this embodiment and Embodiment 2 is that this embodiment further includes S409 to S410:
S409: The ARP server receives terminal address information sent by a cloud system management server, where the address information includes the MAC address and the IP address of the terminal.
   For example, the correspondence between the MAC and the IP of the first terminal is delivered, where the IP address of the first terminal is IP1, and the MAC corresponding to the IP address is MAC1.
S410: The ARP server determines whether the MAC address corresponding to the IP address exists in the locally saved correspondence between an IP address and a MAC address of the terminal. If the MAC address does not exist in the correspondence, the ARP server stores the correspondence between the IP address and the MAC address in the GARP packet in the locally saved correspondence between the IP address and the MAC address of the terminal; if the MAC address exists in the correspondence, the ARP server determines whether the MAC address corresponding to the IP address is consistent with the MAC address in the GARP broadcast packet. If yes, the processing is not performed; and if not, an original MAC address is replaced with the MAC address in the GAPR broadcast packet.

For example, the ARP server receives terminal address information sent by the management server in S409, the ARP server updates the locally stored correspondence between the MAC address and the IP address according to the information, returns the corresponding information to the management server, and confirms that the MAC information of IP1 is already received.

The locally saved correspondence between the IP address and the MAC address of the terminal may be as shown in Table 2:

**Table 2**

| Sequence No. | IP address | MAC address |
|---|---|---|
| 1 | xxxxxxxx | xxxxxxxx |
| 2 | 10.85.132.31 | 00:0f:e2:2f:e4:6c |
| ...... | ...... | ...... |

Preferably, in order to maintain the accuracy of the information collected by the ARP server, the ARP server may send confirmation information to data in a record table at a fixed time in the form of unicast; the MAC and IP of the ARP server are used as a source MAC and a source IP, and the recorded IP is an ARP request message sent by a destination. If the destination host returns the ARP reply message, effective time is updated, and after the certain time, the ARP reply message is re-detected; and if the ARP replay message is still not received after a few attempts, it may be considered that the host does not exist, so this record is invalid, and deleted from the data base.

The difference between this embodiment and Embodiment 3 mainly lies in different collecting manners of the ARP server information. In this embodiment, a single management system is adopted, MAC and IP address information of all the hosts in the second-layer network are directly set into the ARP server, without the need for the ARP server to acquire the MAC and the IP information of the host by collecting the GARP in the network. This manner is particularly effective in a network of a cloud computing virtualized data center. In the cloud computing virtualized data center, a virtual host is created and managed by a cloud management system, both the MAC address and the IP address thereof are managed and allocated by the cloud management system, therefore, in this case, the correspondence between the IP and the MAC of each virtual host may be set into the ARP server directly by the cloud management system. The load of the ARP server is lightened, and at the same time, the acquired data is more accurate.

### Embodiment 5

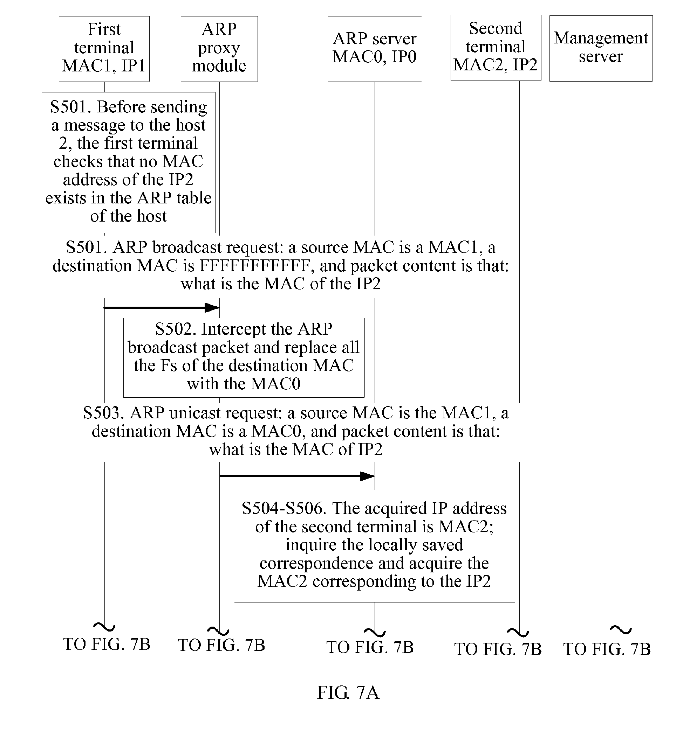

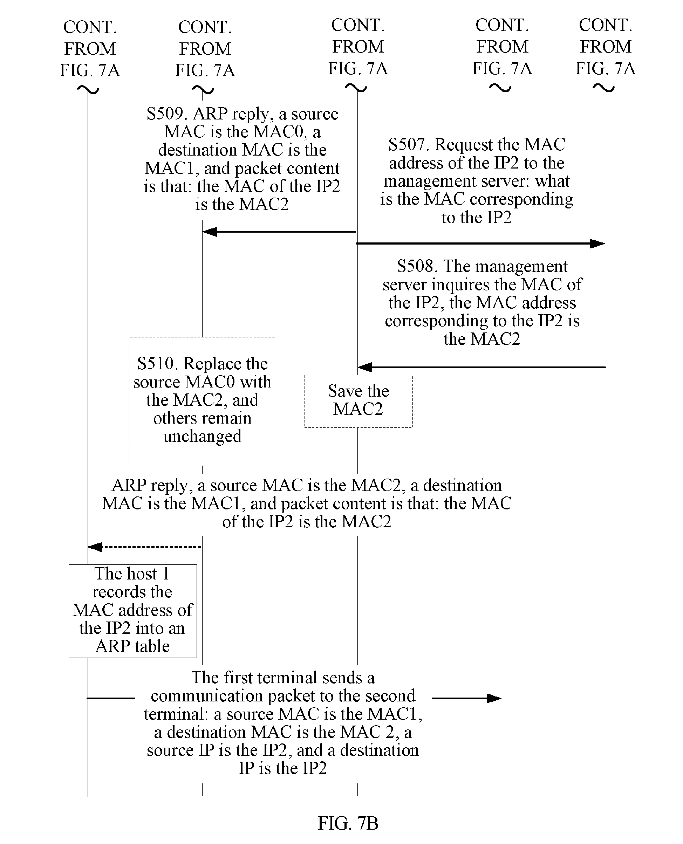

As shown in FIG. 7, an embodiment of the present invention further provides a method for acquiring a MAC address. The method in this embodiment is mainly applied in a network of a cloud computing virtualized data center, and the method relates to a management server, where the management server is configured to create and manage each terminal of a cloud management system, for example, a virtual machine, allocate an IP and a MAC for each terminal, and set corresponding correspondence between the MAC and the IP to the ARP server. The ARP server related in this embodiment is located in a network, and may perform communication with the management server. The method includes steps S501 to S510, where steps S501 to S506 are the same as steps S201 to S206 in Embodiment 2, S509 to S510 are the same as step S207 to S208 in Embodiment 2, which are not repeated again herein. For specific steps and figures, refer to Embodiment 2. The difference between this embodiment and Embodiment 2 is that this embodiment further includes S507 to S508:
S507: When no MAC address corresponding to the IP address of the second terminal exists in the locally saved correspondence between the IP address and the MAC address of the terminal, the ARP server sends the request for acquiring the MAC address corresponding to the IP address of the second terminal to the management server.
   For example, when no MAC address corresponding to the IP address of the second terminal exists in the locally saved correspondence between the MAC address and the IP address of the terminal on the ARP server, the ARP server requests the MAC address of an IP2 from the management server, and the packet content is that: "what is the MAC corresponding to the IP2?"
S508: The management server replies to the request, sends the MAC address corresponding to the IP address of the second terminal, namely the MAC2 to the ARP server, and the ARP server stores the correspondence between the IP2 and the MAC2 to the locally saved correspondence.

In this embodiment, when the ARP server receives the request for acquiring the MAC address corresponding to the IP address, when no MAC information corresponding to the IP address exists in the locally saved correspondence, the ARP server actively performs inquiry to the management server, without the need of being delivered by the management server, and the acquiring manner of the MAC information corresponding to the IP address is further improved.

### Embodiment 6

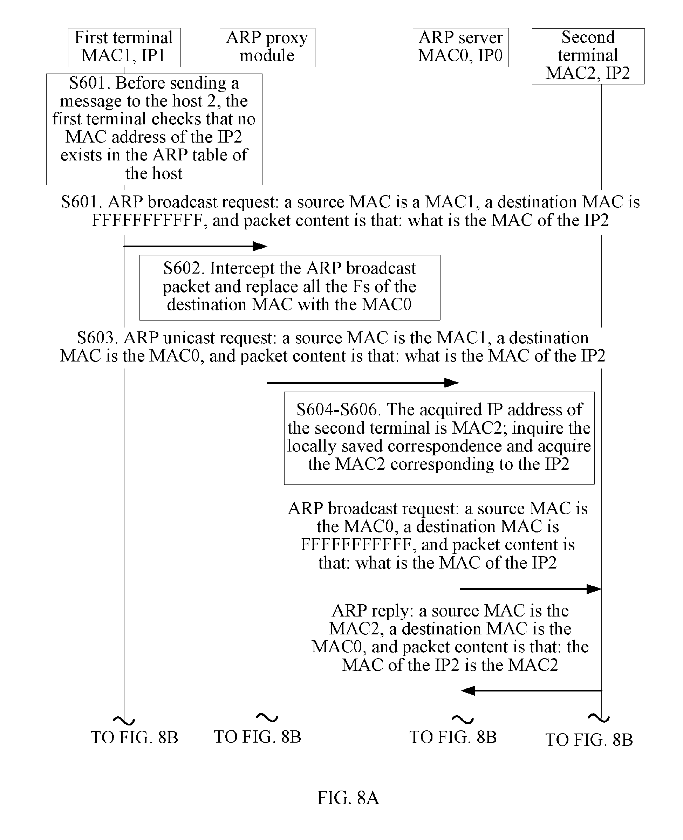

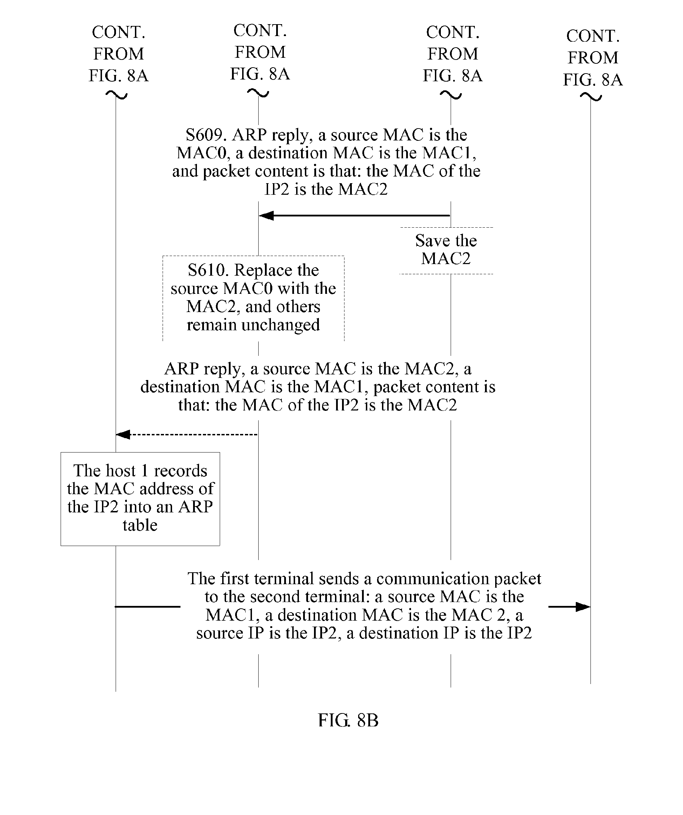

As shown in FIG. 8, an embodiment of the present invention further provides a method for acquiring a MAC address, and the method includes steps S601 to S610. Steps S601 to S606 are the same as step S201 to S206 in Embodiment 2, S609 to S610 are the same as steps S207 to S208 in Embodiment 2, which are not repeated again herein. For specific steps and figures, refer to Embodiment 2. The difference between this embodiment and Embodiment 2 is that this embodiment further includes steps S607 to S608:
S607: After the ARP server receives an ARP requesting packet, initiate broadcast to the overall second-layer network if there is no relevant information in this database.
   When there is no MAC address corresponding to an IP address IP2 of a second terminal in the locally saved correspondence on the ARP server, an ARP broadcast request is sent, the requesting source MAC is a MAC0; a destination MAC is: FFFFFFFFFFF; and packet content is that: "what is the MAC of the IP2?"
S608: The second terminal in a second-layer network replies to the broadcast, and sends an ARP reply packet to the ARP server, where the reply packet includes the MAC address of the second terminal.
   For example, after receiving the APR broadcast sent in S605, the second terminal sends an ARP reply. In the ARP reply packet, a source MAC address is a MAC2; a destination MAC address is a MAC0; and packet content is that: the MAC of the IP2 is the MAC2.

In this embodiment, after the ARP server receives the ARP request packet, if the locally saved correspondence between the IP address and the MAC address can not satisfy the ARP request, the ARP server initiates broadcast to the overall second-layer network, and then returns the ARP reply to an original ARP requester according to the reply packet, thereby assuring the integrity of the overall ARP reply, and preventing ARP request failure caused by not updating the locally saved address information timely.

### Embodiment 7

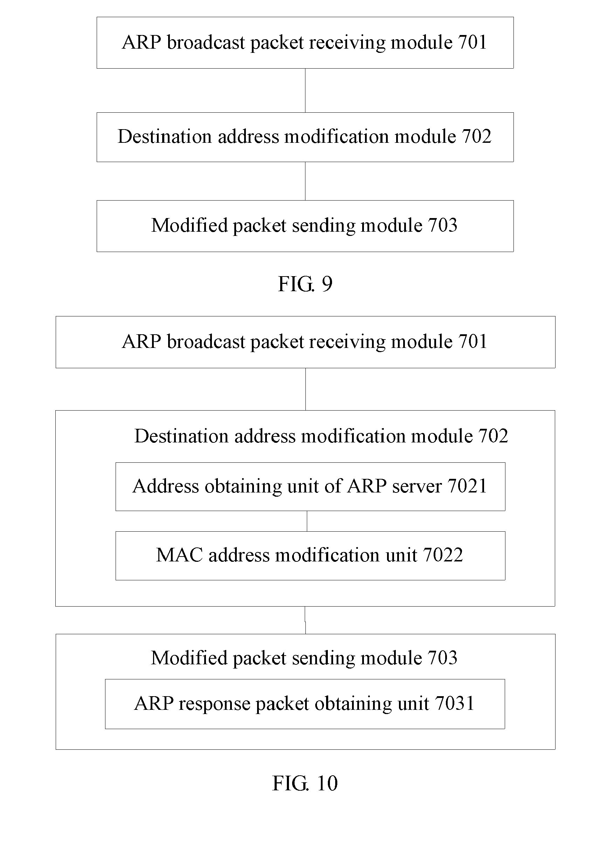

As shown in FIG. 9, an embodiment of the present invention further provides a proxy module, including:
an ARP broadcast packet receiving module 701, configured to receive a first address resolution protocol ARP broadcast packet sent by a first terminal, where the first ARP broadcast packet is used to request acquiring a media access control MAC address of a second terminal;
a destination address modification module 702, configured to acquire an address of an ARP server, and modify a destination address of the first ARP broadcast packet to make it be the address of the ARP server; and
a modified packet sending module 703, configured to send the modified first ARP broadcast packet to the ARP server, so that the ARP server acquires the MAC address of the second terminal according to the modified first ARP broadcast packet, and sends an ARP reply packet to the first terminal, where the ARP reply packet includes the MAC address of the second terminal.

In the embodiment of the present invention, the address of the ARP server is acquired, and the destination address of the first ARP broadcast packet is modified to make it be the address of the ARP server; the ARP broadcast packet becomes a unicast packet sent to only the ARP server, the network bandwidth occupied by the ARP broadcast is reduced. Besides, because the modified ARP broadcast packet is sent to only the ARP server and the ARP reply packet including the MAC address of the second terminal is sent by the ARP server, and other receiving ends in the network can not receive the modified ARP broadcast packet, occupancy of CPU resources of other receiving ends in the network is prevented, and a resource utilization rate of the system and a communication efficiency of each terminal are improved.

### Embodiment 8

As shown in FIG. 10, an embodiment of the present invention further provides a proxy module, where the proxy module includes an ARP broadcast packet receiving module 701, a destination address modification module 702 and a modified packet sending module 703 in Embodiment 7, where the destination address modification module 702 specifically includes:
an APR server address acquiring unit 7021, configured to acquire a locally saved address of the APR server; and
a MAC address modification unit 7022, configured to, when the locally saved address of the APR server is a MAC address of the ARP server, modify a destination MAC address of the first ARP broadcast packet to make it be the MAC address of the ARP server; and when the locally saved address of the APR server is an IP address of the ARP server, acquire the MAC address of the ARP server, and modify the destination MAC address of the first ARP broadcast packet to make it be the acquired MAC address of the ARP server.

The modified packet sending module 703 specifically includes:
an ARP reply packet acquiring unit 7031, configured to acquire a ARP reply packet, replace a source MAC address in the ARP reply packet with the MAC address of the second terminal, replace a source IP address in the ARP reply packet with an IP address of the second terminal, and send the modified ARP reply packet to the first terminal.

In the embodiment of the present invention, the address of the ARP server is acquired, and the destination address of the first ARP broadcast packet is modified to make it be the address of the ARP server; the ARP broadcast packet becomes a unicast packet sent to only the ARP server, the network bandwidth occupied by the ARP broadcast is reduced. Besides, because the modified ARP broadcast packet is sent to only the ARP server and the ARP reply packet including the MAC address of the second terminal is sent by the ARP server, and other receiving ends in the network can not receive the modified ARP broadcast packet, occupancy of CPU resources of other receiving ends in the network is prevented, and a resource utilization rate of the system and a communication efficiency of each terminal are improved.

### Embodiment 9

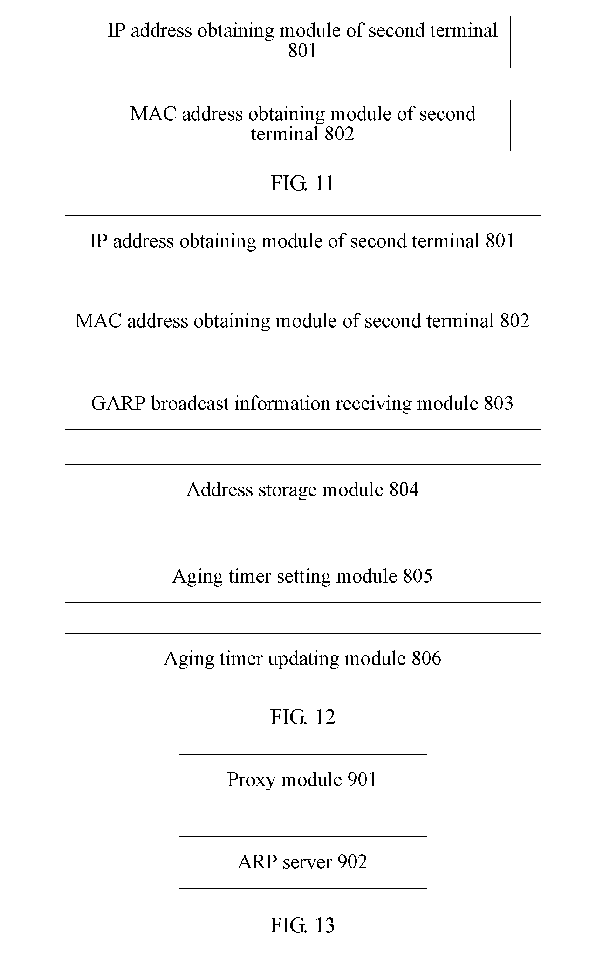

As shown in FIG. 11, an embodiment of the present invention further provides an ARP server, including:
an IP address acquiring module 801 of a second terminal, configured to acquire an IP address of the second terminal in a modified first ARP broadcast packet; and
a MAC address acquiring module 802 of the second terminal, configured to inquire correspondence between the IP address of the terminal and a MAC address of the terminal, and acquire the MAC address corresponding to the IP address of the second terminal.

In the embodiment of the present invention, the address of the ARP server is acquired, and the destination address of the first ARP broadcast packet is modified to make it be the address of the ARP server; the ARP broadcast packet becomes a unicast packet sent to only the ARP server, the network bandwidth occupied by the ARP broadcast is reduced. Besides, because the modified ARP broadcast packet is sent to only the ARP server and the ARP reply packet including the MAC address of the second terminal is sent by the ARP server, and other receiving ends in the network can not receive the modified ARP broadcast packet, occupancy of CPU resources of other receiving ends in the network is prevented, and a resource utilization rate of the system and a communication efficiency of each terminal are improved.

### Embodiment 10

As shown in FIG. 12, an embodiment of the present invention further provides an ARP server, where the ARP server includes an IP address acquiring module 801 of a second terminal and the MAC address acquiring module 802 of the second terminal in Embodiment 9, where the ARP server further includes:
a GARP broadcast information receiving module 803, configured to receive GARP broadcast information sent by all terminals in the same network as the module;
an address storing module 804, configured to acquire and save an IP address of the terminal and a MAC address of the terminal in the GARP broadcast information;
an aging timer setting module 805, configured to set an aging timer for the saved IP address and the saved MAC address of the terminal; and
an aging timer updating module 806, configured to update the aging timer according to the received GARP broadcast information sent by all the terminals in the same network as the module.

In the embodiment of the present invention, the address of the ARP server is acquired, and the destination address of the first ARP broadcast packet is modified to make it be the address of the ARP server; the ARP broadcast packet becomes a unicast packet sent to only the ARP server, the network bandwidth occupied by the ARP broadcast is reduced. Besides, because the modified ARP broadcast packet is sent to only the ARP server and the ARP reply packet including the MAC address of the second terminal is sent by the ARP server, and other receiving ends in the network can not receive the modified ARP broadcast packet, occupancy of CPU resources of other receiving ends in the network is prevented, and a resource utilization rate of the system and a communication efficiency of each terminal are improved.

### Embodiment 11

As shown in FIG. 13, an embodiment of the present invention further provides a system for acquiring a media access control address, where the system includes a proxy module 901 and an ARP server 902, where:
the proxy module 901 is configured to receive a first address resolution protocol ARP broadcast packet sent by a first terminal, where the first ARP broadcast packet is used to request acquiring a media access control MAC address of a second terminal; acquire an address of an ARP server, modify a destination address of the first ARP broadcast packet to make it be the address of the ARP server; and send the modified first ARP broadcast packet to the ARP server;
optionally, the proxy module 901 is further configured to acquire an ARP reply packet, replace a source MAC address in the ARP reply packet with the MAC address of the second terminal, replace a source IP address in the ARP reply packet with an IP address of the second terminal, and send the modified ARP reply packet to the first terminal; and
the ARP server 902 is configured to receive the modified first ARP broadcast packet sent by the proxy module; acquire the MAC address of the second terminal according to the modified first ARP broadcast packet, and send the ARP reply packet to the first terminal, where the ARP reply packet includes the MAC address of the second terminal.

In the embodiment of the present invention, the address of the ARP server is acquired, and the destination address of the first ARP broadcast packet is modified to make it be the address of the ARP server; the ARP broadcast packet becomes a unicast packet sent to only the ARP server, the network bandwidth occupied by the ARP broadcast is reduced. Besides, because the modified ARP broadcast packet is sent to only the ARP server and the ARP reply packet including the MAC address of the second terminal is sent by the ARP server, and other receiving ends in the network can not receive the modified ARP broadcast packet, occupancy of CPU resources of other receiving ends in the network is prevented, and a resource utilization rate of the system and a communication efficiency of each terminal are improved.

All or a part of the content in the technical solutions provided by the preceding embodiments may be implemented by a software program. The software program may be stored in a readable storage medium, such as a hard disk, an optical disk, a floppy disk or a Flash memory of the computer.

The foregoing describes only exemplary embodiments of the present invention and is not intended to limit the present invention. Any modification, equivalent replacement, or improvement made without departing the spirit and principle of the present invention shall fall within the protection scope of the present invention.

## Claims

1. A method for acquiring a media access control address, comprising:
receiving a first address resolution protocol, ARP, broadcast packet sent by a first terminal, wherein the first ARP broadcast packet is used to request acquiring a Media Access Control, MAC, address of a second terminal;
acquiring an address of an ARP server, and modifying a destination address of the first ARP broadcast packet to make it be the address of the ARP server; and
sending the modified first ARP broadcast packet to the ARP server, so that the ARP server acquires the MAC address of the second terminal according to the modified first ARP broadcast packet, and sends an ARP reply packet to the first terminal, wherein the ARP reply packet comprises the MAC address of the second terminal.

2. The method according to claim 1, wherein the acquiring the address of the ARP server, and modifying the destination address of the first ARP broadcast packet to make it be the address of the ARP server comprises:
acquiring a locally saved address of the APR server;
when the locally saved address of the APR server is a MAC address of the ARP server, modifying a destination MAC address of the first ARP broadcast packet to make it be the MAC address of the ARP server; and
when the locally saved address of the APR server is an IP address of the ARP server, acquiring the MAC address of the ARP server, and modifying the destination MAC address of the first ARP broadcast packet to make it be the acquired MAC address of the ARP server.

3. The method according to claim 1, wherein the acquiring, by the ARP server, the MAC address of the second terminal according to the modified first ARP broadcast packet comprises:
acquiring, by the ARP server, an IP address of the second terminal in the modified first ARP broadcast packet; and
inquiring, by the ARP server, correspondence between the IP address of the terminal and the MAC address of the terminal, and acquiring the MAC address corresponding to the IP address of the second terminal.

4. The method according to claim 1, wherein the sending the ARP reply packet to the first terminal comprises:
acquiring the ARP reply packet, replacing a source MAC address in the ARP reply packet with the MAC address of the second terminal, replacing a source IP address in the ARP reply packet with an IP address of the second terminal, and sending the modified ARP reply packet to the first terminal.

5. The method according to any one of claims 1 to 4, further comprising:
when the ARP server receives GARP broadcast information sent by all terminals in a same network as the ARP server,
acquiring and saving, by the ARP server, the IP address and the MAC address of the terminal in the GARP broadcast information.

6. The method according to claim 5, further comprising:
setting an aging timer for the IP address and the MAC address of the terminal saved on the ARP server, so that the ARP server updates the aging timer according to the received GARP broadcast information sent by all the terminals in the same network as the ARP server.

7. A proxy module, comprising:
an ARP broadcast packet receiving module, configured to receive a first address resolution protocol ARP broadcast packet sent by a first terminal, wherein the first ARP broadcast packet is used to request acquiring a media access control MAC address of a second terminal;
a destination address modification module, configured to acquire an address of an ARP server, and modify a destination address of the first ARP broadcast packet to make it be the address of the ARP server; and
a modified packet sending module, configured to send the modified first ARP broadcast packet to the ARP server, so that the ARP server acquires the MAC address of the second terminal according to the modified first ARP broadcast packet, and sends an ARP reply packet to the first terminal, wherein the ARP reply packet comprises the MAC address of the second terminal.

8. The proxy module according to claim 7, wherein the destination address modification module comprises:
an APR server address acquiring unit, configured to acquire a locally saved address of the APR server; and
a MAC address modification unit, configured to, when the locally saved address of the APR server is a MAC address of the ARP server, modify a destination MAC address of the first ARP broadcast packet to make it be the MAC address of the ARP server; and when the locally saved address of the APR server is an IP address of the ARP server, acquire the MAC address of the ARP server, and modify the destination MAC address of the first ARP broadcast packet to make it be the acquired MAC address of the ARP server.

9. The proxy module according to claim 7, wherein the modified packet sending module comprises:
an ARP reply packet acquiring unit, configured to acquire the ARP reply packet, replace a source MAC address in the ARP reply packet with the MAC address of the second terminal, replace a source IP address in the ARP reply packet with an IP address of the second terminal, and send the modified ARP reply packet to the first terminal.

10. An ARP server, comprising:
an IP address acquiring module of a second terminal, configured to acquire an IP address of a second terminal in a modified first ARP broadcast packet; and
a MAC address acquiring module of the second terminal, configured to inquire correspondence between the IP address of the terminal and a MAC address of the terminal, and acquire the MAC address corresponding to the IP address of the second terminal.

11. The ARP server according to claim 10, further comprising:
a GARP broadcast information receiving module, configured to receive GARP broadcast information sent by all terminals in a same network as the module; and
an address storing module, configured to acquire and save the IP address and the MAC address of the terminal in the GARP broadcast information.

12. The ARP server according to claim 11, further comprising:
an aging timer setting module, configured to set an aging timer for the saved IP address and the saved MAC address of the terminal; and
an aging timer updating module, configured to update the aging timer according to the received GARP broadcast information sent by all the terminals in the same network as the module

13. A system for acquiring a media access control address, comprising a proxy module and an ARP server, wherein
the proxy module is configured to receive a first address resolution protocol ARP broadcast packet sent by a first terminal, wherein the first ARP broadcast packet is used to request acquiring a media access control MAC address of a second terminal; acquire an address of an ARP server, modify a destination address of the first ARP broadcast packet to make it be the address of the ARP server; and send the modified first ARP broadcast packet to the ARP server; and
the ARP server is configured to receive the modified first ARP broadcast packet sent by the proxy module; acquire the MAC address of the second terminal according to the modified first ARP broadcast packet, and send an ARP reply packet to the first terminal, wherein the ARP reply packet comprises the MAC address of the second terminal.

14. The system according to claim 13, wherein the proxy module is further configured to acquire the ARP reply packet, replace a source MAC address in the ARP reply packet with the MAC address of the second terminal, replace a source IP address in the ARP reply packet with an IP address of the second terminal, and send the modified ARP reply packet to the first terminal.
